# EUROPÄISCHE PATENTSCHRIFT

(11) **EP 0 749 235 B1**
(45) Veröffentlichungstag und Bekanntmachung des Hinweises auf die Patenterteilung: **28.11.2001**
(21) Anmeldenummer: 96108904.2
(22) Anmeldetag: 04.06.1996
(51) Int. Cl.: H04N 3/30

(54) **Bildschirmgerät mit symmetrischer Ablenkung**
Video display unit with symmetrical deflection
Appareil de visualisation à déflection symétrique

(30) Priorität: 16.06.1995 DE 19521816
(43) Veröffentlichungstag der Anmeldung: 18.12.1996
(73) Patentinhaber: GRUNDIG Aktiengesellschaft, 90471 Nürnberg (DE)
(72) Erfinder: Köchel, Matthias, Grundig E.M.V., 90762 Fürth (DE)

(56) Entgegenhaltungen:
- EP-A- 0 598 442
- WO-A-96/36166
- DE-A- 4 207 350
- HIRTZ G ET AL: "SYMMETRICAL DEFLECTION FOR FUTURE IDTV/HDTV RECEIVERS" IEEE TRANSACTIONS ON CONSUMER ELECTRONICS, Bd. 39, Nr. 3, 1. August 1993, Seiten 225-232, XP000396284

## Beschreibung

Die Erfindung betrifft ein Bildschirmgerät, mit den Merkmalen des Oberbegriffs nach Anspruch 1.

Bei den sich heute am Markt befindlichen Bildschirmgeräten wird die Horizontalablenkung des Elektronenstrahls durch einen Strom durch die Ablenkspulen verursacht, der einen sägezahnartigen Verlauf hat. Beim schnellen Rücklauf des Strahls ist die zeitliche Ableitung des Stroms dl/dt sehr hoch, wodurch eine unerwünscht hohe Spannung notwendig ist. Außerdem entstehen Oberwellen. Zusätzlich entsteht bei höheren Ablenkfrequenzen eine hohe Verlustleistung.

Es ist bekannt, daß man diese Probleme mittels einer symmetrischen Ablenkung lindern kann, bei der Informationen sowohl beim Hin- als auch beim Rücklauf des Elektronenstrahls geschrieben werden. Die Dauer des Hin- und des Rücklaufs ist dabei gleich groß. Als besonders günstig hat sich ein sinusförmiger Verlauf des Ablenkstroms erwiesen.

Aus der Zeitschrift "IEEE Transactions on Consumer Electronics", Vol.CE-31, No.3, August 1985, S.255-261, ist ein Fernsehempfänger mit symmetrischer Zeilenablenkung und verbesserter Bildqualität bekannt. Bei diesem bekannten Fernsehempfänger wird ein symmetrischer Zeilenablenkstrom erzeugt, bei welchem die ansteigende Flanke und die abfallende Flanke gleichlang sind. Im Unterschied zu Fernsehempfängern mit einer asymmetrischen Zeilenablenkung erfolgt bei Fernsehempfängem mit symmetrischer Ablenkung sowohl während des Bildhinlaufs als auch während des Bildrücklaufs eine Darstellung von Bildsignalen auf dem Bildschirm. Es wird weiterhin vorgeschlagen, einen sinusförmigen Zeilenablenkstrom zu verwenden. Ferner ist im bekannten Fall ein Pufferspeicher vorgesehen, der die Bilddaten für den Vor- und Rücklauf des Elektronenstrahls zur Verfügung stellt, und auch eine exakte geometrische Ausrichtung benachbarter Zeilen ermöglicht.

Auch aus der Zeitschrift "IEEE Transactions on Consumer Electronics", Vol.CE-39, August 1993, S.225-233, sind Fernsehempfänger mit symmetrischer Zeilenablenkung bekannt. Auch bei diesen sind im Weg des darzustellenden Signals Pufferspeicher vorgesehen. Diese dienen unter anderem auch dazu, Schaltungstoleranzen und Temperatureffekte auszugleichen. Weiterhin ist im bekannten Fall darauf hingewiesen, daß bei Fernsehgeräten, in denen unter Verwendung eines Bildspeichers eine Normwandlung erfolgt, der für die Normwandlung ohnehin benötigte Speicher auch für die Zwecke der symmetrischen Zeilenablenkung mitverwendet werden kann.

Bei den bekannten Bildschirmgeräten wird zur Zeilenablenkung nur der annähernd lineare Teil des sinusförmigen Zeilenablenkstroms verwendet, damit eine gleichmäßige Geschwindigkeit des das Bild schreibenden Elektronenstrahls erreicht wird, um geometrische Verzerrungen zu vermeiden.

An Bildschirmgeräte wird heute zunehmend die Forderung gestellt, daß, beispielsweise bei der Verwendung moderner Computersoftware, die aktive Fläche des Bildschirms des Bildschirmgeräts vollständig genutzt werden kann. Der Bildschirm muß daher Details auch in den Ecken scharf darstellen und muß eine möglichst gleichmäßige Leuchtdichteverteilung aufweisen.

Bekannte Bildschirmgeräte weisen allerdings den Nachteil auf, daß sowohl die Leuchtdichte als auch die Auflösung von der Mitte zum Rand des Bildschirms hin abnimmt.

Weitere Ablenkschaltungen mit symmetrischer Ablenkung des Elektronenstrahls sind aus der Offenlegungsschrift DE 42 07 350 A1 und der Patentschrift EP 51 092 B1 bekannt. Bei diesen Ablenkschaltungen wird zur Geometriekorrektur des Bildes auf dem Bildschirm die Kurvenform (z.B. Sinusfunktion) des Zeilenablenkstroms berücksichtigt. Dies erfolgt gemäß DE 42 07 350 A1 durch geeignete Steuerung des Auslesens der Bildsignale aus einem vorgesehenen Bildsignalspeicher.

Aus der Offenlegungsschrift DE 34 11 963 A1 ist eine weitere Ablenkschaltung mit symmetrischer Ablenkung bekannt, bei der das Videosignal in einen Speicher eingeschrieben und mit variablem Takt ausgelesen wird.

Eine Möglichkeit, die Auflösung eines Bildschirms zu verbessern besteht grundsätzlich darin, den Kathodenstrahlstrom zu verringern. Es ergibt sich dadurch eine kleinere und besser definierte Landungsfläche des Elektronenstrahls auf der Innenseite des Sichtschirms, wodurch der Detailkontrast verbessert wird. Um eine gleichmäßige Schärfeverteilung des Bildschirms zu erreichen, könnte man also den Kathodenstrahlstrom von der Mitte des Bildschirms zum Rand hin reduzieren. Dies stünde aber im Widerspruch zu der Forderung, daß die Bildhelligkeit gleichmäßig hoch sein soll.

Ausgehend von diesem Stand der Technik liegt der Erfindung die Aufgabe zugrunde, einen Weg aufzuzeigen, wie bei einem Bildschirmgerät mit den im Oberbegriff des Anspruchs 1 angegebenen Merkmalen eine gleichmäßige Leuchtdichte - und Schärfeverteilung erreicht werden kann, ohne die oben beschriebenen Nachteile in Kauf nehmen zu müssen.

Diese Aufgabe wird bei einem Bildschirmgerät mit den im Oberbegriff des Anspruchs 1 angegebenen Merkmalen durch die im kennzeichnenden Teil des Anspruchs 1 angegebenen Merkmale gelöst. Vorteilhafte Weiterbildungen ergeben sich aus den abhängigen Ansprüchen.

Die Vorteile der Endung bestehen ins besondere darin, daß ein Bildschirmgerät mit den beanspruchten Merkmalen über die gesamte Bildschirmbreite und -höhe eine gleichmäßige Leuchtdichte- und Schärfeverteilung aufweist, ohne daß im dargestellten Bild Verzerrungen auftreten.

Weitere Vorteile der vorliegenden Erfindung ergeben sich aus der Erläuterung eines Ausführungsbeispiels an Hand von Figuren.

Es zeigt
Figur 1 ein Blockschaltbild mit den zum Verständnis der Erfindung wesentlichen Bestandteilen eines Bildschirmgerätes,
Figur 2 ein Diagramm zur Erläuterung der unterschiedlichen Länge des Elektronenstrahls in Abhängigkeit vom Ablenkwinkel,
Figur 3a ein Blockschaltbild einer ersten Ausführungsform des Taktgebers 4 von Figur 1,
Figur 3b ein Blockschaltbild einer zweiten Ausführungsform des Taktgebers 4 von Figur 1,
Figur 4 ein Diagramm zur Erläuterung zeitlicher Verläufe verschiedener in Figur 1 auftretender Signale,
Figur 5a ein Blockschaltbild einer ersten Ausführungsform des geregelten Verstärkers 3 von Figur 1, und
Figur 5b ein Blockschaltbild einer zweiten Ausführungsform des geregelten Verstärkers 3 von Figur 1.

Beim erfindungsgemäßen Bildschirmgerät wird eine gleichmäßige Leuchtdichte- und Schärfeverteilung dadurch erreicht, daß der Elektronenstrahl mit unterschiedlicher Geschwindigkeit abgelenkt wird und in den Randbereichen des Bildschirms eine geringere Intensität aufweist. Die Ablenkgeschwindigkeit wird so gewählt, daß sie am Rand einen geringeren und in der Mitte einen größeren Wert aufweist. Die Verweildauer des Elektronenstrahls ist daher am Rand höher und es ergibt sich eine relativ höhere Leuchtdichte als in der Mitte, wodurch die Verringerung der Intensität des Elektronenstrahls ausgeglichen wird.

Mit einem sinusförmigen Verlauf des horizontalen Ablenkstroms ergibt sich eine näherungsweise sinusförmige Ablenkgeschwindigkeit des Elektronenstrahls, die die obige Bedingung erfüllt. Damit keine Verzerrungen des Bilds entstehen, werden die Bilddaten in einen Zeilenspeicher, der mindestens eine Zeile umfaßt, eingelesen und mit einer variablen Geschwindigkeit ausgelesen.

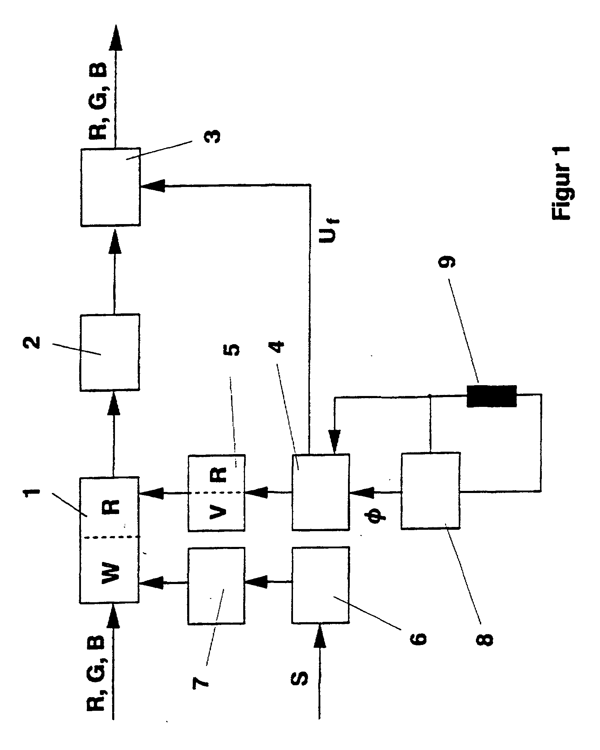

Die Figur 1 zeigt ein Blockschaltbild mit den zum Verständnis der Erfindung wesentlichen Bestandteilen eines Bildschirmgerätes.

Die am Eingang anliegenden Signale, bei denen es sich um R,G,B-Signale handelt, werden über eine Speichereinheit 1, einen Digital/Analog-Wandler 2 und einen geregelten Verstärker 3 dem nicht gezeichneten Bildschirm zugeführt. Weiterhin enthält das gezeigte Bildschirmgerät eine Speichersteuerschaltung und eine Horizontalablenkschaltung. Die Speichersteuerschaltung weist einen Lesetaktgeber 4, einen Schreibtaktgeber 6 sowie Adreßzähler 5 und 7 auf. Der Adreßzähler 5 enthält einen Vorwärts/Rückwärts-Zähler. Die Horizontalablenkschaltung enthält einen Horizontalablenkgenerator 8 und eine Horizontalablenkspule 9.

Zur Ermittlung des Einschreibtaktes für die Speichereinheit 1 werden im Schreibtaktgeber 6 Synchronimpule in ein Schreibtaktsignal umgesetzt, welches den Adreßzähler 7 ansteuert, so daß der Einschreibvorgang im zeitlichen Rhythmus der Eingangssignale erfolgen kann.

Der Horizontalablenkgenerator 8 stellt an seinem Ausgang den Horizontalablenkstrom zur Verfügung, welcher der Horizontalablenkspule 8 und dem Lesetaktgeber 4 zugeführt wird. Im Lesetaktgeber 4 wird zunächst in einem Differentiator aus dem Ablenkstrom die zeitliche Ableitung gebildet, welche ein Maß für die Geschwindigkeit des Elektronenstrahls ist. Diese wiederum ist abhängig von der Position des momentanen Abtastpunktes innerhalb der vorliegenden Zeile. Femer wird dem Lesetaktgeber 4 vom Horizontalablenkgenerator 8 ein Signal φ zugeführt, welches Informationen über die Phasenlage des Horizontalablenkstromes enthält.

Gemäß einer vorteilhaften Weiterbildung wird im Lesetaktgeber 4 zur Erzeugung des Lesetaktsignals ein Korrektursignal verwendet, das alle durch die geometrischen Eigenschaften der Bildröhre hervorgerufenen unerwünschten Abbildungseffekte kompensiert. Beispielsweise wird die Abhängigkeit der Länge des Elektronenstrahls vom Ablenkwinkel bzw. der momentanen Position in der vorliegenden Zeile berücksichtigt.

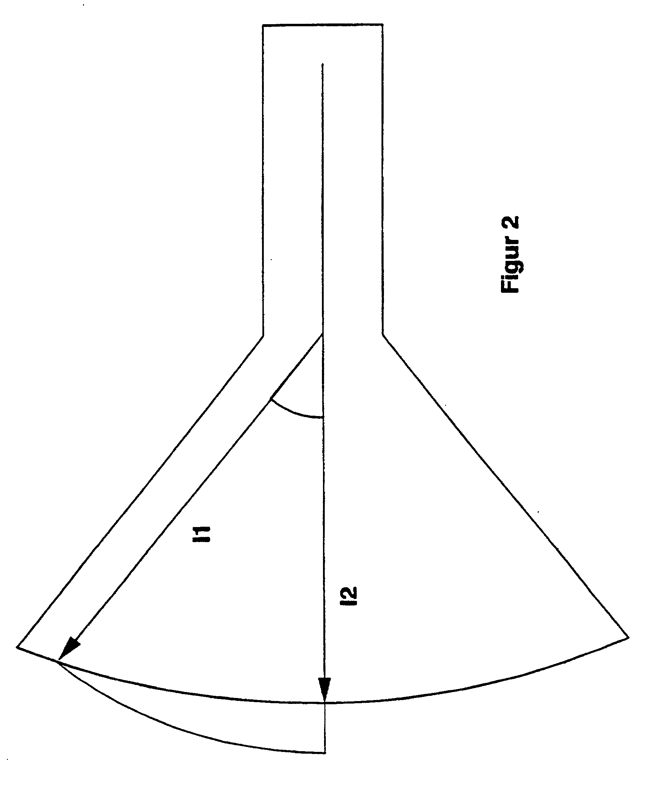

Die Figur 2 zeigt anschaulich, daß die Länge I1 des Elektronenstrahls am Rand der Bildröhre größer ist als die Länge I2 in der Mitte. Daraus resultiert eine unterschiedliche horizontale Geschwindigkeit des Elektronenstrahls auf dem Bildschirm, wodurch erforderlich wird, ein Korrektursignal zu erzeugen, das diesen Effekt ausgleicht.

Der Lesetaktgenerator 5 erzeugt aus den ihm zugeführten Signalen ein Auslesetaktsignal, welches innerhalb der Dauer einer darzustellenden Zeile variabel und umgekehrt proportional zu der Geschwindigkeit des Elektronenstrahls auf dem Bildschirm ist.

Dieses Lesetaktsignal wird über den Adreßzähler 5, welcher einen Vorwärts/Rückwärtszähler enthält, der Speichereinheit 1 zugeführt. Dies bewirkt, daß die in der Speichereinheit 1, bei der es sich um mindestens einen Zeilenspeicher handelt, abgespeicherten R,G,B-Signale während der Dauer einer Zeile mit variablem Takt ausgelesen werden. Dadurch ist es möglich, nicht nur den linearen Teil des sinusförmigen Horizontalablenkstroms zur Signaldarstellung zu nutzen, sondern auch einen Teil des nichtlinearen Teils des Horizontalablenkstroms. Dies wiederum ermöglicht es, die Amplitude des Horizontalablenkstroms im Vergleich zum Stand der Technik zu verringern. Ferner wird bei einem derartigen Vorgehen in Zeilenrichtung eine Bilddarstellung mit hoher Linearität erreicht.

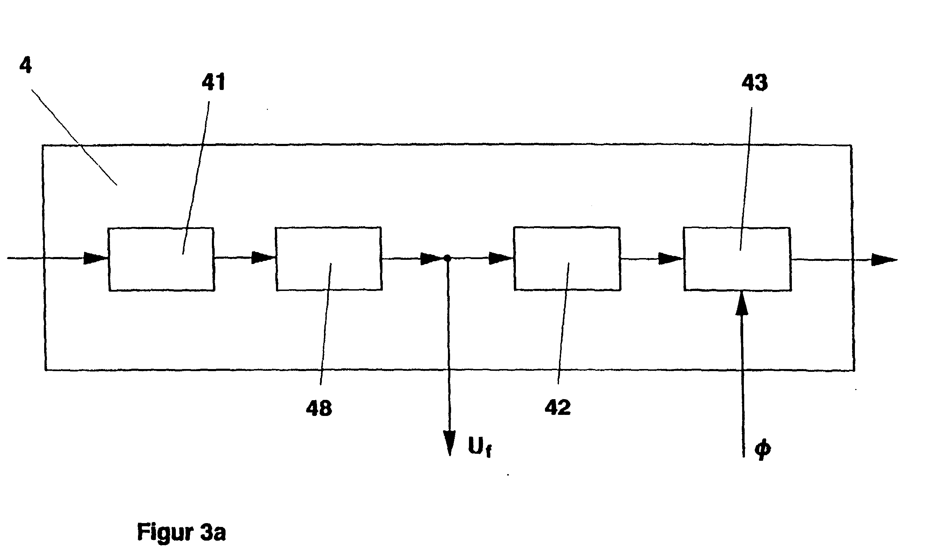

Die Figur 3a zeigt ein Blockschaltbild einer ersten Ausführungsform des Lesetaktgebers 4 von Figur 1. Dieser enthält ein Differenzierglied 41, einen Gleichrichter 48, einen spannungsgesteuerten Oszillator 42 und einen Pulsformer 43. Dem Eingang des Differenziergliedes 41 wird der Ablenkstrom Iₕ zugeführt. Demnach steht am Ausgang des Differenziergliedes 41 ein Signal zur Verfügung, das der Ableitung des Ablenkstromes nach der Zeit entspricht. Dieses Signal steuert nach der Gleichrichtung 48 den spannungsgesteuerten Oszillator 42 zur Erzeugung eines Signals vorgegebener Frequenz an. Dieses wiederum wird im Pulsformer 43 in das Lesetaktsignal umgewandelt, wobei dem Pulsformer 43 auch das im Horizontalablenkgenerator erzeugte Signal φ zugeführt wird, welches Informationen über die Phasenlage des Horizontalablenkstromes enthält.

Das Signal φ wird dazu verwendet, den Start- und Stoppzeitpunkt der vom Pulsformer 43 erzeugten Signale festzulegen. Das am Ausgang des Lesetaktgebers zur Verfügung stehende Lesetaktsignal wird dem Adreßzähler 5 zugeführt, der ausgangsseitig mit dem Speicher 1 verbunden ist.

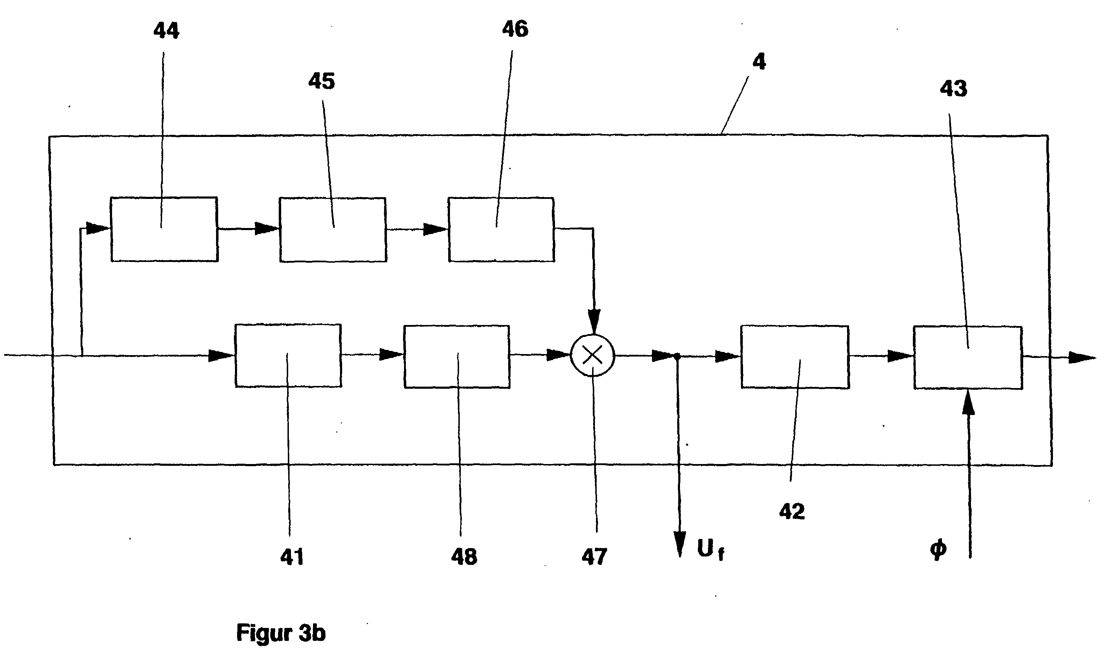

Die Figur 3b zeigt ein Blockschaltbild einer zweiten Ausführungsform des Lesetaktgebers 4 von Figur 1. Diese Ausführungsform unterscheidet sich von der in der Figur 3a gezeigten dadurch, daß sie weiterhin einen A/D-Wandler 44, eine Speichertabelle 45, einen D/A-Wandler 46 und ein Multiplizierglied 47 enthält. Mittels dieser Zusatzschaltung wird das bereits oben erwähnte Korrektursignal erzeugt und dem Ausgangssignal des Gleichrichters 48 überlagert.

Zur Einstellung der Intensität des Elektronenstrahls wird der Ausgangsstrom des geregelten Verstärkers 3 von Figur 1 mittels eines Spannungssignals U_{f} gesteuert, dessen Spannung proportional zur Geschwindigkeit des Elektronenstahls und damit seiner Position ist. Bei einer hohen Geschwindigkeit (Mitte der Zeile) erzeugt der geregelte Verstärker 3 somit einen größeren Ausgangsstrom als bei einer kleinen Geschwindigkeit (Ränder der Zeile). Das Signal Uₜ wird, wie in den Figuren 3a und 3b dargestellt, von der gleichgerichteten Ableitung des Ablenkstroms Iₕ gebildet, wobei in Figur 3b zusätzlich das oben beschriebene Korrektursignal mit eingeht.

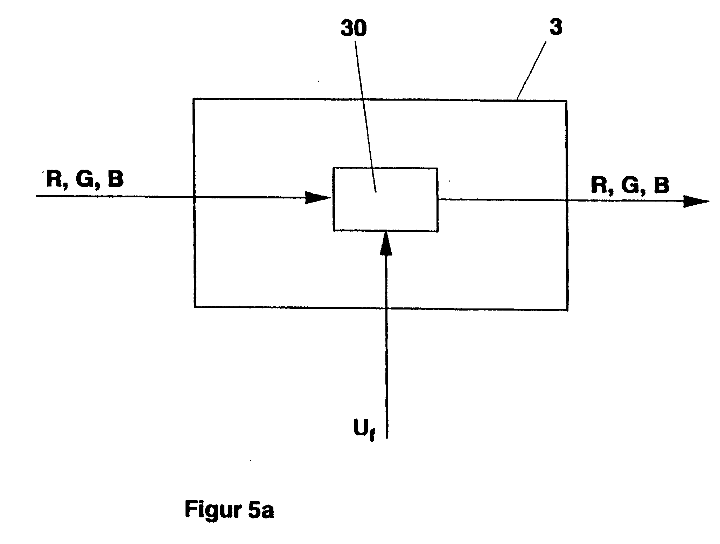

Gemäß einer in Figur 5a dargestellten ersten Ausführungsform weist der geregelte Verstärker 3 einen durch das Spannungssignal U_{f} gesteuerten Verstärker 30 auf, dessen Ausgangsstrom die Kathode ansteuert und, wie oben erläutert, die durch die unterschiedliche Geschwindigkeit des Elektronenstrahls verursachten Leuchtdichteunterschiede ausgleicht.

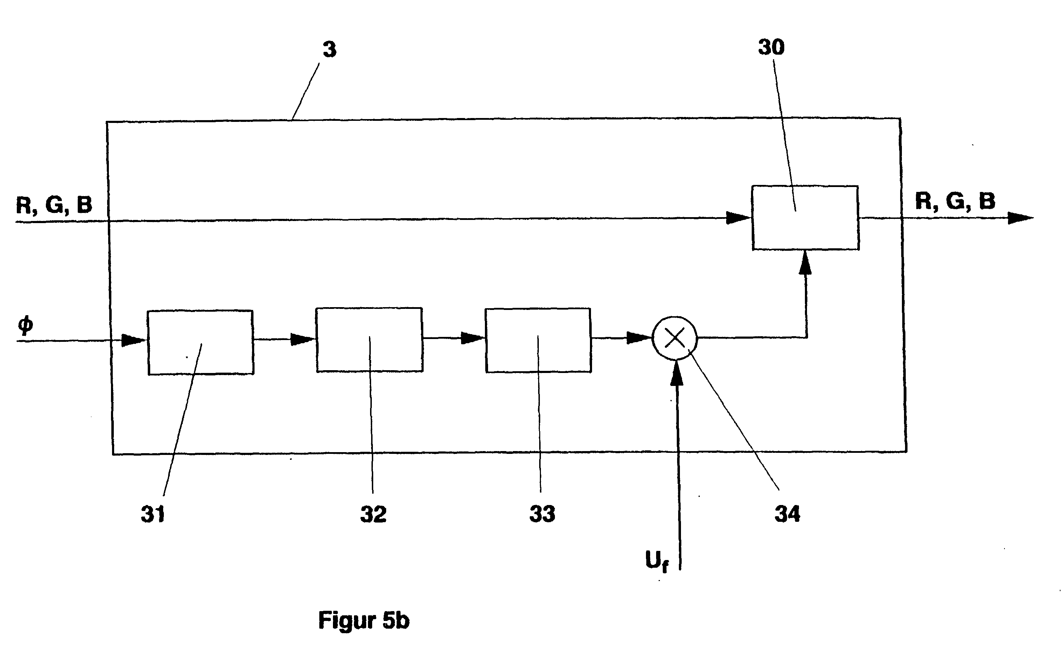

Gemäß einer in Figur 5b dargestellten zweiten Ausführungsform weist der geregelte Verstärker 3 einen durch das Spannungssignal U, gesteuerten Verstärker 30, eine Korrekturschaltung, gebildet von einem Digital/Analog-Wandler 31, einer Speichertabelle 32 und einem Analog/Digital-Wandler 33, sowie einen Multiplizierer 34, der das Signal der Korrekturschaltung mit dem Spannungssignal U_{f} verknüpft, auf.

Der Ausgangsstrom dieses geregelten Verstärkers, der die Kathode ansteuert, gleicht zusätzlich zu den durch die unterschiedliche Geschwindigkeit des Elektronenstrahls verursachten Leuchtdichteunterschiede auch die Leuchtdichteschwankungen der Bildschirmröhre aus. Dazu wird aus dem Signal φ, welches der Phasenlage des Horizontalablenkstroms und damit der Position des Elektronenstrahls in der Zeile entspricht, das Korrektursignal gebildet, indem der für die jeweilige Position bestimmte Korrekturwert aus der Speichertabelle 32 ausgelesen wird.

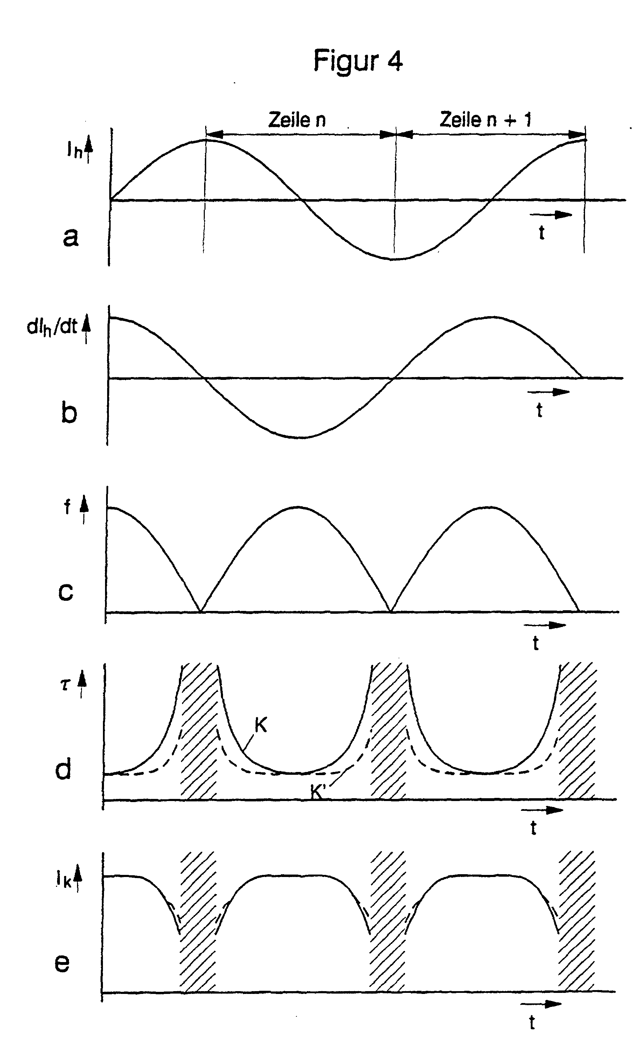

Die Figur 4 zeigt Diagramme zur Erläuterung des zeitlichen Verlaufs verschiedener Signale von Figur 1.

In Figur 4a der zeitliche Verlauf des Horizontalablenkstromes Iₕ während der Dauer zweier aufeinanderfolgender Zeilen gezeigt. Dieser Horizontalablenkstrom wird dem Eingang des in Figur 3a gezeigten Differenziergliedes 41 zugeführt. Die Figur 4b zeigt den Verlauf des am Ausgang des Differenziergliedes 41 vorliegenden Signals, das der zeitlichen Ableitung des Horizontalablenkstroms entspricht. Aus der Figur 4c ist das am Ausgang des spannungsgesteuerten Oszillators 42 zur Verfügung gestellte Frequenzsignal f ersichtlich. Die Figur 4d zeigt das am Ausgang des Pulsformers 43 vorliegende Lesetaktsignal τ, das dem in der Figur 1 enthaltenen Adreßzähler 5 zugeführt wird. Die in der Figur 4d schraffiert gezeichneten Bereiche deuten die horizontalen Austastlücken an, während der vom Lesetaktgenerator kein Lesetaktsignal erzeugt wird. Aus dem Verlauf des in der Figur 4d gezeigten Signals ist ersichtlich, daß die Dauer des Lesetaktsignals τ in der Mitte einer Zeile am kleinsten ist und in horizontaler Richtung zu beiden Bildrändern hin größer wird.

Wird zur Erzeugung des Auslesetaktsignals der in der Figur 3b angegebene Lesetaktgenerator verwendet, bei welchem das Korrektursignal berücksichtigt wird, dann ergibt sich für das Lesetaktsignal der in der Figur 4d gestrichelt gezeichnete Signalverlauf K'. Dieser ist insgesamt etwas flacher als der Verlauf des Signals K ohne Berücksichtigung des Korrektursignals.

Die Figur 4e zeigt schließlich den Ausgangsstrom Iₖ des geregelten Verstärkers 3, der an der Kathode anliegt. Die durchgezogenen Linien geben den Verlauf des Ausgangsstroms an, wie er zum Ausgleich der unterschiedlichen Geschwindigkeit des Elektronenstrahls erzeugt wird (Figur 5a). Die gestrichelten Linien geben ein Beispiel für den Verlauf des Ausgangsstroms an, wenn zusätzlich die Leuchtdichteschwankungen der Bildröhre ausgeglichen werden (Figur 5b). In diesem Beispiel wird der Kathodenstrom zu den Rändern der Bildröhre hin etwas angehoben, um eine homogene Leuchtdichteverteilung zu erhalten.

Der Einsatz des erfindungsgemäßen Bildschirmgeräts ist neben der Computertechnik auch für andere Gebiete in denen eine Bildschirmanzeige verwendet wird möglich, beispielsweise bei Fernsehgeräten.

## Patentansprüche

1. Bildschirmgerät mit
einer Horizontalablenkschaltung mit einem Horizontalablenkgenerator zur Erzeugung eines Ablenkstromes für eine Horizontalablenkspule derart, daß eine symmetrische Ablenkung des Elektronenstrahls erfolgt, bei der sowohl der Hinlauf als auch der Rücklauf zur Signaldarstellung genutzt wird und bei der die Ablenkgeschwindigkeit von der Bildschirmmitte zum Rand hin abnimmt,
einer Speichereinheit zur Zwischenspeicherung des darzustellenden Signals, und
einer Speichersteuerschaltung zur Erzeugung des Schreib- und des Lesetaktes für das darzustellende Signal, wobei
die Speichersteuerschaltung einen Lesetaktgenerator (4) zur Erzeugung des Lesetaktes aufweist, welcher den Lesetakt derart erzeugt, daß er innerhalb der Dauer einer darzustellenden Zeile variabel ist,
**dadurch gekennzeichnet,**
**daß** ein geregelter Verstärker (3) zur Erzeugung eines Kathodenstrahistroms vorhanden ist, der den Kathodenstrahlstrom abhängig von der horizontalen Geschwindigkeit des Elektronenstrahls in der darzustellenden Zeile erzeugt, derart daß die Strahlintensität von der Bildschirmmitte zum Rand hin abnimmt.

2. Bildschirmgerät nach Anspruch 1,
**dadurch gekennzeichnet,**
**daß** die Dauer (τ) des Lesetaktes des Lesetaktgenerators (4) umgekehrt proportional zur horizontalen Geschwindigkeit des Elektronenstrahls auf dem Bildschirm ist.

3. Bildschirmgerät nach Anspruch 1 oder 2,
**dadurch gekennzeichnet,**
**daß** der geregelte Verstärker (3) den Kathodenstrahlstrom bei einer Verringerung der horizontalen Geschwindigkeit des Elektronenstrahls reduziert.

4. Bildschirmgerät nach einem der Ansprüche 1 bis 3,
**dadurch gekennzeichnet,**
**daß** das Bildschirmgerät eine Schaltung aufweist, die ein von der Geschwindigkeit des Elektronenstrahls abhängiges Ausgangssignal (U_{f}) erzeugt.

5. Bildschirmgerät nach Anspruch 4,
**dadurch gekennzeichnet,**
**daß** die Schaltung eine Reihenschaltung aufweist, die ein Differenzierglied (41), einen Gleichrichter (48), der ein von der Geschwindigkeit des Elektronenstrahls abhängiges Ausgangssignal (U_{f}) erzeugt, einen spannungsgesteuerten Oszillator (42) und einen Pulsformer (43) aufweist.

6. Bildschirmgerät nach Anspruch 4 oder 5,
**dadurch gekennzeichnet,**
**daß** die Schaltung eine Zusatzschaltung (44,45,46) zur Erzeugung eines ersten Korrektursignals aufweist.

7. Bildschirmgerät nach Anspruch 6,
**dadurch gekennzeichnet,**
**daß** die Zusatzschaltung eine Reihenschaltung aufweist, die einen A/D-Wandler (44), eine Speichertabelle (45) und einen D/A-Wandler (46) enthält, und
**daß** das Ausgangssignal des D/A-Wandlers (46) und das Ausgangssignal des Gleichrichters (48) mittels eines Multiplizierers (47) zu einem von der Geschwindigkeit und der Position des Elektronenstrahls abhängigen Ausgangssingal (U_{f}) überlagert werden.

8. Bildschirmgerät nach einem oder mehreren der Ansprüche 4 bis 7,
**dadurch gekennzeichnet,**
**daß** das Ausgangssignal (U_{f}) des Lesetaktgenerators (4) den geregelten Verstärker (3) steuert.

9. Bildschirmgerät nach Anspruch 8,
**dadurch gekennzeichnet,**
**daß** der geregelte Verstärker (3) eine Zusatzschaltung (31,32,33) zur Erzeugung eines zweiten Korrektursignals aufweist.

10. Bildschirmgerät nach Anspruch 9,
**dadurch gekennzeichnet,**
**daß** die Zusatzschaltung eine Reihenschaltung aufweist, die einen A/D-Wandler (31), eine Speichertabelle (32) und einen D/A-Wandler (33) enthält, und
**daß** das Ausgangssignal des D/A-Wandlers (33) und das Ausgangssignal (U_{f}) des Lesetaktgenerators (4) mittels eines Multiplizierers (34) überlagert werden.

11. Bildschirmgerät nach einem oder mehreren der vorhergehenden Ansprüche,
**dadurch gekennzeichnet,**
**daß** der Horizontalablenkgenerator (7) zur Erzeugung eines sinusförmigen Ablenkstromes vorgesehen ist.

## Claims

1. Visual display unit comprising
a horizontal deflection circuit having a horizontal deflection generator for generating a deflection current for a horizontal deflection coil of a type such that a symmetrical deflection of the electron beam takes place in which both the forward scan and the return scan are used for signal display and in which the deflection velocity decreases from the centre of the display screen towards the edge,
a memory unit for temporarily storing the signal to be displayed, and
a memory control circuit for generating the write clock and the read clock for the signal to be displayed, wherein the memory control circuit has a read clock generator (4) for generating the read clock which generates the read clock in such a way that it is variable within the duration of a line to be displayed, **characterized in that** there is present a controlled amplifier (3) for generating a cathode ray current, which amplifier generates the cathode ray current as a function of the horizontal velocity of the electron beam in the line to be displayed in such a way that the beam intensity decreases from the centre of the display screen to the edge.

2. Visual display unit according to Claim 1, **characterized in that** the duration (τ) of the read clock of the read clock generator (4) is inversely proportional to the horizontal velocity of the electron beam on the display screen.

3. Visual display unit according to Claim 1 or 2, **characterized in that** the controlled amplifier (3) reduces the cathode ray current as the horizontal velocity of the electron beam is reduced.

4. Visual display unit according to one of Claims 1 to 3, **characterized in that** the visual display unit has a circuit that generates an output signal (U_{f}) that is dependent on the velocity of the electron beam.

5. Visual display unit according to Claim 4, **characterized in that** the circuit has a series connection that has a differentiating element (41), a rectifier (48) that generates an output signal (U_{f}) that is dependent on the velocity of the electron beam, a voltage-controlled oscillator (42) and a pulse shaper (43).

6. Visual display unit according to Claim 4 or 5, **characterized in that** the circuit has an additional circuit (44,45,46) for generating a first correction signal.

7. Visual display unit according to Claim 6, **characterized in that** the additional circuit has a series connection containing an A/D converter (44), a memory table (45) and a D/A converter (46), and **in that** the output signal of the D/A converter (46) and the output signal of the rectifier (48) are superimposed by means of a multiplier (47) to form an output signal (U_{f}) that is dependent on the velocity and the position of the electron beam.

8. Visual display unit according to one or more of Claims 4 to 7, **characterized in that** the output signal (U_{f}) of the read clock generator (4) controls the controlled amplifier (3).

9. Visual display unit according to Claim 8, **characterized in that** the controlled amplifier (3) has an additional circuit (31,32,33) for generating a second correction signal.

10. Visual display unit according to Claim 9, **characterized in that** the additional circuit has a series connection containing an A/D converter (31), a memory table (32) and a D/A converter (33), and **in that** the output signal of the D/A converter (33) and the output signal (U_{f}) of the read clock generator (4) are superimposed by means of a multiplier (34).

11. Visual display unit according to one or more of the preceding claims, **characterized in that** the horizontal deflection generator (7) is provided to generate a sinusoidal deflection current.

## Revendications

1. Appareil à écran de visualisation comportant
un circuit de balayage horizontal comportant un générateur de balayage horizontal pour produire un courant de déviation pour une bobine de balayage horizontale de manière à obtenir un balayage symétrique du faisceau d'électrons, et dans lequel aussi bien le déplacement aller que le déplacement de retour sont utilisés pour la représentation de signaux, et dans lequel la vitesse de balayage diminue depuis le centre de l'écran en direction du bord,
une unité de mémoire pour mémoriser temporairement le signal devant être représenté, et
un circuit de commande de mémoire pour produire la cadence d'écriture et la cadence de lecture pour le signal à représenter, et dans lequel
le circuit de commande de mémoire comporte un générateur de cadence de lecture (4) pour produire la cadence de lecture, qui produit la cadence de lecture de telle sorte que cette cadence est variable pendant la durée d'une ligne à représentée,
**caractérisé en ce**
**qu'**il est prévu un amplificateur réglé (3) servant à produire un courant de faisceau cathodique, qui produit le courant de faisceau cathodique en fonction de la vitesse horizontale du faisceau d'électrons dans la ligne devant être représentée, de telle sorte que l'intensité du faisceau diminue depuis le centre de l'écran jusqu'au bord.

2. Appareil à écran de visualisation selon la revendication 1, **caractérisé en ce que** la durée (τ) de la cadence de lecture du générateur de cadence de lecture (4) est inversement proportionnelle à la vitesse horizontale du faisceau d'électrons sur l'écran.

3. Appareil à écran de visualisation selon la revendication 1 ou 2, **caractérisé en ce que** l'amplificateur réglé (3) réduit le courant du faisceau cathodique lors d'une réduction de la vitesse horizontale du faisceau d'électrons.

4. Appareil à écran de visualisation selon l'une quelconque des revendications 1 à 3, **caractérisé en ce que** l'appareil à écran de visualisation comprend un circuit qui produit un signal de sortie U_{f} qui dépend de la vitesse du faisceau d'électrons.

5. Appareil à écran de visualisation selon la revendication 4, **caractérisé en ce que** le circuit comporte un circuit série qui possède un circuit différentiateur (41), un redresseur (48) qui produit un signal de sortie (U_{f}) du dépend de la vitesse du faisceau d'électrons, un oscillateur (42) commandé par la tension et un dispositif de mise en forme d'impulsions (43).

6. Appareil à écran de visualisation selon la revendication 4 ou 5, **caractérisé en ce que** le circuit comporte un circuit complémentaire (44, 45, 46) pour produire un premier signal de correction.

7. Appareil à écran de visualisation selon la revendication 6, **caractérisé en ce que** le circuit supplémentaire possède un circuit série qui contient un convertisseur analogique/numérique (44), une table de mémoire (45) et un convertisseur numérique/analogique (46), et que le signal de sortie du convertisseur numérique/analogique (46) et le signal de sortie du redresseur (48) sont superposés au moyen d'un multiplicateur (47) à un signal de sortie (U_{f}) qui dépend de la vitesse et de la position du faisceau d'électrons.

8. Appareil à écran de visualisation selon une ou plusieurs des revendications 4 à 7, **caractérisé en ce que** le signal de sortie (U_{f}) du générateur de cadence de lecture (4) commande l'amplificateur réglé (3).

9. Appareil à écran de visualisation selon la revendication 8, **caractérisé en ce que** l'amplificateur réglé (3) possède un circuit supplémentaire (31, 32, 33) servant à produire un second signal de correction.

10. Appareil à écran de visualisation selon la revendication 9, **caractérisé en ce que** le circuit supplémentaire comporte un circuit série, qui contient un convertisseur analogique/numérique (31), un tableau de mémoire (32) et un convertisseur numérique/analogique (33), et que le signal de sortie du convertisseur numérique/analogique (33) et le signal de sortie (U_{f}) du générateur de cadence de lecture (4) sont superposés au moyen d'un multiplicateur (34).

11. Appareil à écran de visualisation selon une ou plusieurs des revendications précédentes, **caractérisé en ce que** le générateur de balayage horizontal (7) est prévu pour la production d'un courant de déviation de forme sinusoïdale.
